# FASCICULE DE BREVET EUROPEEN

(11) **EP 2 649 568 B1**
(45) Date de publication et mention de la délivrance du brevet: **14.04.2021**
(21) Numéro de dépôt: 11788486.6
(22) Date de dépôt: 29.11.2011
(51) Int. Cl.: G06N 3/063, G06N 3/04

(54) **CIRCUIT ELECTRONIQUE A ARCHITECTURE NEUROMORPHIQUE**
ELEKTRONISCHE SCHALTUNG MIT NEUROMORPHER ARCHITEKTUR
ELECTRONIC CIRCUIT WITH NEUROMORPHIC ARCHITECTURE

(30) Priorité: 08.12.2010 FR 1060260
(43) Date de publication de la demande: 16.10.2013
(73) Titulaire: Commissariat à l'Énergie Atomique et aux Énergies Alternatives, 75015 Paris (FR)
(72) Inventeur: HELIOT, Rodolphe, F-38000 Grenoble (FR); BELLEVILLE, Marc, F-38120 Saint-Egreve (FR); THOMAS, Sigrid, F-38400 Saint Martin d'Heres (FR)
(74) Mandataire: Marks & Clerk France
(86) Numéro de dépôt international: PCT/EP2011/071284
(87) Numéro de publication internationale: WO 2012/076366

(56) Documents cités:
- M. GIULIONI, P. CAMILLERI, V. DANTE, D. BADONI, G. INDIVERI, J. BRAUN, P. DEL GIUDICE: "A VLSI network of spiking neurons with plastic fully configurable "stop-learning" synapses", PROCEEDINGS OF THE 15TH IEEE INTERNATIONAL CONFERENCE ON ELECTRONICS, CIRCUITS AND SYSTEMS (ICECS'08), 31 août 2008 (2008-08-31), pages 678-681, XP031362578, DOI: 10.1109/ICECS.2008.4674944
- A. A. BAMFORD, A. F. MURRAY, D. J. WILLSHAW: "Large developing receptive fields using a distributed and locally reprogrammable address-event receiver", IEEE TRANSACTIONS ON NEURAL NETWORKS, vol. 21, no. 2, 12 janvier 2010 (2010-01-12), pages 286-304, XP011287395, DOI: 10.1109/TNN.2009.2036912
- J. R. VOGELSTEIN, U. MALLIK, J. T. VOGELSTEIN, G. CAUWENBERGHS: "Dynamically reconfigurable silicon array of spiking neurons with conductance-based synapses", IEEE TRANSACTIONS ON NEURAL NETWORKS, vol. 18, no. 1, 2 janvier 2007 (2007-01-02), pages 253-265, XP011152920, DOI: 10.1109/TNN.2006.883007
- S. SAIGHI, J. TOMAS, Y. BORNAT, B. BELHADJ, O. MALOT, S. RENAUD: "Real-time multi-board architecture for analog spiking neural networks", PROCEEDINGS OF THE 2010 IEEE INTERNATIONAL SYMPOSIUM ON CIRCUITS AND SYSTEMS (ISCAS'2010), 30 mai 2010 (2010-05-30), pages 1939-1942, XP031725266, DOI: 10.1109/ISCAS.2010.5538039
- J. HARKIN, F. MORGAN, L. MCDAID, S. HALL, B. MCGINLEY, S. CAWLEY: "A reconfigurable and biologically inspired paradigm for computation using network-on-chip and spiking neural networks", INTERNATIONAL JOURNAL OF RECONFIGURABLE COMPUTING, vol. 2009, 908740, janvier 2009 (2009-01), XP055002387, DOI: 10.1155/2009/908740
- "Autonomously reconfigurable artificial neural network architecture" In: Z. Jin: "Autonomously reconfigurable artificial neural network on a chip", 25 juin 2010 (2010-06-25), University of Pittsburgh, XP055002306, pages 54-123, le document en entier
- SERRANO-GOTARREDONA R ET AL: "On Real-Time AER 2-D Convolutions Hardware for Neuromorphic Spike-Based Cortical Processing", IEEE TRANSACTIONS ON NEURAL NETWORKS, IEEE SERVICE CENTER, PISCATAWAY, NJ, US, vol. 17, no. 7, 1 July 2008 (2008-07-01), pages 1196-1219, XP011226406, ISSN: 1045-9227

## Description

L'invention concerne les circuits électroniques neuromorphiques.

Ces circuits sont des réseaux de multiples cellules configurés de manière à imiter un peu le comportement des réseaux de neurones biologiques. Les réseaux de neurones biologiques comportent des neurones élémentaires qui reçoivent et émettent de l'information, et des synapses qui connectent ces neurones à d'autres neurones. Par analogie, les circuits neuromorphiques comprennent en général un réseau matriciel de cellules élémentaires de traitement qu'on appellera neurones, identifiés chacun par une adresse respective dans la mémoire, et une mémoire matricielle d'autant de mémoires élémentaires qu'il y a de neurones ; chaque mémoire élémentaire est associée à un neurone et peut donc être identifiée par l'adresse unique de ce neurone ; elle contient des adresses d'autres neurones qui doivent recevoir une information en provenance du neurone correspondant à cette mémoire élémentaire.

On considère dans ce qui suit les neurones dits "à décharge". Ces neurones reçoivent des signaux d'entrée en provenance d'autres neurones ; ils les traitent sous forme généralement analogique et produisent un résultat. Le résultat peut être l'émission d'un signal d'évènement, par exemple une impulsion à un moment donné. C'est cette impulsion, dite de "décharge du neurone", qui sert à aller chercher dans la mémoire élémentaire associée au neurone non seulement les adresses d'autres neurones (neurones-cible ou neurones de destination), mais aussi des poids associés à chacune de ces adresses. Les poids associés signifient qu'un neurone va influencer un ou plusieurs autres neurones de manière pondérée et non de manière indifférenciée.

Les adresses des neurones influencés par un neurone sont appelées adresses post-synaptiques ; les poids associés sont appelés poids synaptiques.

Par exemple, un neurone élémentaire analogique peut être constitué sous forme d'un intégrateur temporel à fuite ; son potentiel interne représente la somme algébriques de plusieurs potentiels appliqués au fil du temps à ses entrées par d'autres neurones, cette somme étant affectée par des courants de fuite ; lorsque le potentiel interne atteint un certain seuil, le neurone signale cet évènement en émettant un signal d'événement qui est une impulsion de très courte durée, souvent appelé "spike". Le potentiel revient alors à un état de repos, en attente de nouvelles entrées. Le signal d'évènement, ou spike, est utilisé, avec l'adresse du neurone qui l'a émis, pour extraire le contenu de la mémoire élémentaire associée à cette adresse ; ce contenu est constitué par une ou plusieurs adresses post-synaptiques et leurs poids synaptiques associés. Ces adresses et poids sont reçus par un circuit de traitement qui élabore des signaux d'entrée pondérés et qui les transmet en tant que signaux d'entrée aux neurones correspondant aux adresses post-synaptiques.

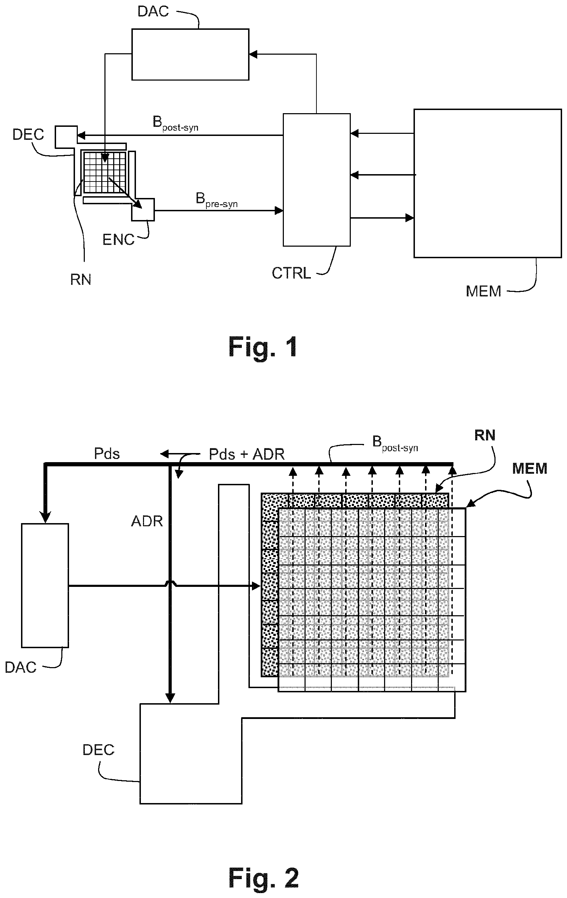

Dans la technique antérieure telle qu'illustrée sur la figure 1, le signal d'événement issu de la décharge d'un neurone de la matrice de neurones RN est appliqué à un encodeur d'adresse ENC qui détermine l'adresse du neurone qui a généré l'événement et qui envoie cette adresse sur un bus dit présynaptique B_{pre-syn}. Le bus pré-synaptique est un bus d'adresse pour la mémoire. Ce bus est géré par un contrôleur CTRL qui applique cette adresse à la mémoire MEM et qui recueille de la mémoire une ou plusieurs adresses post-synaptiques et les poids associés à chacune de celles-ci. Le contrôleur émet successivement les différentes adresses post-synaptiques sur un bus d'adresses post-synaptiques B_{post-syn} qui applique ces adresses à un décodeur d'adresses DEC associé à la matrice de neurones RN. En même temps, le contrôleur envoie les poids synaptiques à un convertisseur digital analogique DAC qui établit des niveaux analogiques en fonction de chaque poids synaptique. Un niveau de signal analogique affecté d'un poids synaptique déterminé est donc appliqué à chacun des neurones post-synaptiques identifiés par le contenu de la mémoire élémentaire qui a été activée par le signal d'évènement.

Même si les évènements sont espacés dans le temps, c'est-à-dire même si la fréquence moyenne de décharge des neurones est largement inférieure à la vitesse de traitement des évènements par le contrôleur, il y a une saturation possible du contrôleur, des encodeurs et des décodeurs, en raison du grand nombre de neurones de la matrice. De plus ces circuits sont encombrants et ils consomment beaucoup d'énergie. C'est notamment le cas du système décrit par le document Giulioni et al., « A VLSI network of spiking neurons with plastic fully configurable "stop-learning" synapses », Proceedings of 15th international conférence on Electronics, circuits and systems, 678 - 681, 2008. C'est également le cas du système décrit par Serrano-Gotarredona et al., "On real-time AER 2-D convolutions hardware for neuromorphic spike-based cortical processing", IEEE Transactions on Neural Networks, vol. 19(7), pp. 1196-1219, 2008.

L'invention a pour but d'améliorer l'architecture et le fonctionnement des réseaux neuromorphiques.

On propose pour cela un circuit neuromorphique selon la revendication indépendante 1, ainsi qu'un procédé de fonctionnement de ce circuit selon la revendication indépendante 11. Des modes particuliers de réalisation de cette invention sont définis dans les revendications dépendantes 2-10.

On supprime la nécessité d'un encodeur d'adresses et d'un contrôleur pour gérer l'accès à la mémoire. Le lien entre le neurone et la mémoire élémentaire pour signaler un évènement qui lui est associé est une connexion directe qui ne passe ni par un encodeur d'adresses ni par un décodeur d'adresse.

D'autres caractéristiques et avantages de l'invention apparaîtront à la lecture de la description détaillée qui suit et qui est faite en référence aux dessins annexés dans lesquels :
- la figure 1 déjà décrite représente la structure d'un réseau neuronal de l'art antérieur ;
- la figure 2 représente l'architecture de principe d'un circuit neuromorphique ;
- la figure 3 représente une organisation de mémoire du circuit neuromorphique ;
- la figure 4 représente la constitution d'un registre de mémoire élémentaire avec un circuit de gestion respectif pour ce registre ;
- la figure 5 représente un point-mémoire élémentaire du registre ;
- la figure 6 représente une constitution possible du circuit de gestion associé à un registre ;
- la figure 7 est une autre représentation de l'architecture de la mémoire du circuit neuromorphique dans laquelle un registre et son circuit de gestion sont représentés par un seul bloc ;
- la figure 8 représente la mémoire dans laquelle on a associé à chaque registre un petit circuit de sélection programmable qui permet de déterminer si le registre doit être associé directement à un neurone ou s'il doit être considéré comme un registre supplémentaire d'une mémoire élémentaire associée à un autre neurone ;
- la figure 9 représente un registre de mémoire avec son circuit de gestion associé destiné à être utilisé dans le circuit de la figure 8 ;
- la figure 10 représente l'organisation des mémoires élémentaires avec, pour chaque ligne de la mémoire un bloc respectif réunissant le registre et le circuit de gestion de la figure 9 :
- la figure 11 représente un exemple de circuit détaillé correspondant au bloc de circuit de gestion de la figure 9.

L'architecture générale du circuit neuromorphique est représentée à la figure 2. Elle comprend un réseau matriciel RN de neurones agencés en lignes et colonnes. Chaque neurone est identifié par son adresse en ligne et en colonne, et il comprend un circuit élémentaire ayant des entrées et une sortie. Le réseau RN est représenté sur la figure 2 par un carré quadrillé sur fond tacheté.

Une mémoire programmable MEM est associée à la matrice de neurones et chaque élément de cette mémoire est associé à un neurone respectif. La mémoire MEM est représentée sur la figure 2 par un carré quadrillé avec le même pas que le réseau de neurones et superposé en perspective et en transparence partielle au-dessus du réseau de neurones. Cette représentation est symbolique pour montrer non seulement la correspondance entre un élément de mémoire et un neurone associé, mais aussi pour montrer que la mémoire peut physiquement être disposée au-dessus ou au-dessous du réseau de neurones et que chaque élément de la mémoire peut être relié directement à un neurone associé situé juste au-dessus ou au-dessous.

L'élément de mémoire associé à un neurone sera appelé ci-après mémoire élémentaire ; la mémoire élémentaire comprend donc une entrée d'activation reliée directement par un conducteur respectif à la sortie du neurone associé, de sorte que lorsque le neurone émet un signal d'évènement, ce signal active la mémoire élémentaire et autorise l'extraction des données qui y sont contenues. Ces données sont les adresses des neurones post-synaptiques qui doivent recevoir une information lors de l'évènement signalé par le neurone considéré, et les poids synaptiques associés à chacune de ces adresses (un poids synaptique Pds par adresse post-synaptique ADR). Les données lues dans la mémoire élémentaire lors de son activation sont envoyées de la mémoire vers un bus post-synaptique B_{post-syn}.

Les poids synaptiques transportés par le bus sont appliqués à un convertisseur numérique-analogique DAC (dans le cas général où les neurones sont des circuits élémentaires analogiques, mais on pourrait envisager aussi qu'ils soient purement numériques). Les adresses transportées par le bus post-synaptique sont appliquées à un décodeur d'adresses DEC apte à sélectionner en ligne et en colonne un neurone déterminé. Le neurone sélectionné à un moment donné par une adresse post-synaptique reçoit sur son entrée une tension ou un courant produit à ce moment par le convertisseur DAC, correspondant au poids synaptique associé à cette adresse sur le bus.

Un neurone qui a reçu un ou plusieurs signaux d'entrée, peut émettre au bout d'un certain temps un signal d'événement indiquant le résultat d'un état qu'il a atteint à ce moment compte-tenu des signaux d'entrée reçus. Ce signal déclenche directement, sans passer par un encodeur d'adresses ni par un contrôleur, l'activation de la mémoire élémentaire correspondant à ce neurone. Cette activation déclenche l'émission d'une ou plusieurs adresses post-synaptiques et des poids synaptiques associés à chacune de ces adresses.

Il y a donc maintenant une liaison directe entre la sortie de chaque neurone et une entrée d'activation d'une mémoire élémentaire associée à ce neurone. La mémoire élémentaire est située de préférence au-dessus (ou au-dessous, ce qui revient au même) de chaque neurone comme cela est représenté sur la figure 2, mais elle pourrait aussi être située à côté de chaque neurone. Dans le cas où elle est située au-dessus, on peut prévoir d'utiliser une technologie d'empilements de circuits intégrés, avec une connexion du type TSV (de l'anglais "Through Silicon Vias") pour chaque mémoire élémentaire, c'est-à-dire un contact à travers l'épaisseur de la puce entre une mémoire élémentaire intégrée à la surface d'une puce et un neurone situé à la surface d'une autre puce. La géométrie du réseau est dans ce cas organisée (comme représenté à la figure 2) avec le même pas de répartition pour la mémoire et le réseau de neurones, aussi bien en lignes qu'en colonnes. Si une mémoire élémentaire occupe une surface beaucoup plus importante qu'un neurone, il peut être souhaitable de diviser la mémoire en plusieurs plans superposés contenant chacun une partie de la mémoire, mais avec toujours un lien direct (même si c'est à travers l'épaisseur de plusieurs puces) entre un neurone et une mémoire élémentaire.

Les données d'adresse et de poids contenues dans une mémoire élémentaire sont de préférence transmises au bus post synaptique par l'intermédiaire de conducteurs en colonnes, c'est-à-dire que, pour chaque colonne de mémoire, au moins un conducteur relie toutes les mémoires élémentaires de la colonne. Les conducteurs de colonne sont symbolisés par des flèches en traits tiretés sur la figure 2. On n'a représenté qu'un conducteur par colonne, mais dans la pratique ce conducteur est un bus de plusieurs conducteurs si les données d'une mémoire élémentaire sont envoyées en parallèle et non en série vers le bus post-synaptique. Un circuit de gestion de conflits non représenté peut être prévu pour éviter que des données en provenance de deux colonnes différentes ne tentent de s'imposer en même temps sur le bus post-synaptique.

Par ailleurs, un circuit électronique de gestion de la mémoire élémentaire est contenu de préférence dans chaque mémoire élémentaire ; il sert à éviter que plusieurs mémoires élémentaires d'une même colonne ne transmettent simultanément leur contenu sur le conducteur de colonne. On reviendra plus loin sur la gestion des conflits de ce type. C'est ce circuit qui reçoit le signal d'événement issu du neurone associé et qui détermine à quel moment l'information doit être extraite de la mémoire élémentaire.

La mémoire MEM est programmable si on veut que le circuit neuromorphique soit adaptable à n'importe quelle configuration de liaisons synaptiques entre neurones.

Pour la programmation de la mémoire on utilise des décodeurs d'adresse de ligne et d'adresse de colonne, qui n'ont pas été représentés sur la figure 2 pour ne pas surcharger la représentation (le décodeur DEC de la figure 2 est le décodeur d'adresse de neurone, pas un décodeur d'adresse de la mémoire). Les décodeurs de ligne désignent une ligne de mémoires élémentaires dans lequel on veut inscrire des données, et les décodeurs de colonne permettent d'appliquer les données désirées à chaque mémoire élémentaire de cette ligne, en passant par les conducteurs de colonne mentionnés ci-dessus.

En pratique, comme on va le voir, chaque mémoire élémentaire est subdivisée en plusieurs registres adressables séparément, chaque registre contenant une adresse post-synaptique et un poids synaptique associé. Un circuit de gestion respectif est alors associé à chaque registre dans la mémoire élémentaire.

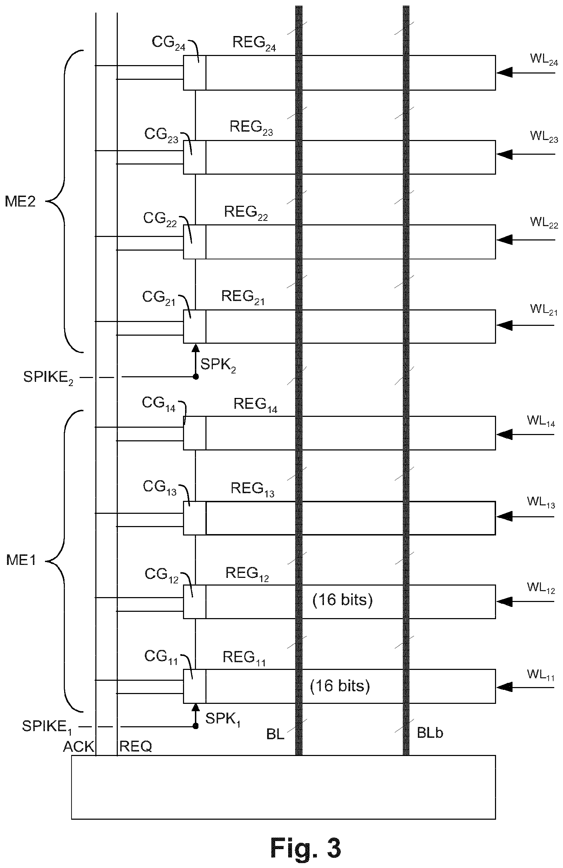

La figure 3 représente une constitution des mémoires élémentaires qui permet de mettre en œuvre l'architecture de la figure 2, c'est-à-dire qui permet de fonctionner avec une mémoire élémentaire reliée directement à un neurone associé et qui permet d'extraire les informations de la mémoire vers un bus post-synaptique par l'intermédiaire de conducteurs de colonne.

Dans cet exemple, la mémoire élémentaire est composée de quatre registres de mémoire destinés chacun à contenir une adresse post-synaptique et un poids synaptique associé. Chaque neurone peut ainsi influencer entre zéro et quatre autres neurones. Le nombre quatre est pris à titre d'exemple et pourrait être un autre nombre. Les contenus des registres sont extraits les uns après les autres lors de l'activation de la mémoire élémentaire par le neurone associé.

Deux mémoires élémentaires ME1 et ME2, appartenant à une même colonne, sont représentées ; elles sont associées à deux neurones différents du réseau RN. Les autres colonnes ne sont pas représentées. Chacun des quatre registres d'une mémoire élémentaire peut fournir son contenu sur un bus en colonne ; ce dernier relie tous les registres de toutes les mémoires élémentaires de la colonne. Les registres sont désignés par REG₁₁ à REG₁₄ pour la mémoire ME1, et par REG₂₁ à REG₂₄ pour la mémoire ME2. Le bus comprend dans cet exemple 32 conducteurs, servant à transmettre des mots de 16 bits représentant le contenu d'un registre. Chaque bit d'information est ici transmis sur deux conducteurs pour transmettre la valeur réelle du bit mais aussi son complément ; cette disposition est liée au fait que la mémoire est de préférence de type SRAM. Les bits sont transmis sur un bus BL de 16 bits, leurs compléments sur un bus BLb de 16 bits. D'autres organisations sont possibles, y compris des organisations dans lesquelles les bits sont transmis en série plutôt qu'en parallèle.

Par ailleurs, deux conducteurs supplémentaires en colonne sont prévus pour la gestion des conflits, afin d'éviter que plusieurs registres ne fournissent simultanément leur contenu sur les bus BL et BLb. L'un des conducteurs supplémentaires, désigné par REQ est destiné à transmettre une requête de la part d'un registre (requête pour demander l'autorisation de fournir des données sur les bus). L'autre, ACK, est destiné à transmettre un signal d'acquittement terminant une extraction de données d'un registre. Ces deux conducteurs sont reliés à un circuit de gestion de conflit associé à chacun des registres. Ce circuit de gestion est représenté schématiquement par un petit bloc CG₁₁ à CG₁₄ et CG₂₁ à CG₂₄ sur la gauche du registre respectif. Ce circuit de gestion comprend deux entrées qui sont respectivement une entrée de signal d'événement neuronal et une entrée d'acquittement (reliée au conducteur d'acquittement ACK), et deux sorties qui sont une sortie de requête (en fait une entrée/sortie de requête reliée au conducteur de requête REQ) et une autre sortie qu'on appellera sortie de signal de lecture.

La mémoire élémentaire ME1 comprend une entrée d'activation SPK₁ reliée directement à un neurone pour en recevoir un signal d'événement SPIKE₁. La mémoire élémentaire ME2 comprend une entrée d'activation SPK₂ reliée directement à un autre neurone pour en recevoir un signal d'événement SPIKE₂. Les signaux SPIKE₁ et SPIKE₂ sont appliqués à l'entrée de signal d'événement du circuit de gestion du premier registre de chaque mémoire, soit respectivement le registre REG₁₁ de la mémoire ME1 et le registre REG₂₁ de la mémoire ME2. Le signal reçu sur l'entrée d'événement d'un registre déclenche la lecture de ce registre.

Les circuits de gestion des registres successifs REG₁₁ à REG₁₄ d'une même mémoire élémentaire ME1 (et il en est de même pour ME2) sont reliés en cascade par la sortie de signal de lecture d'un circuit de gestion qui entre sur l'entrée de signal d'événement du suivant. Le signal de lecture issu du circuit de gestion d'un registre sera donc considéré comme un signal d'événement (comme s'il provenait d'un neurone) par le registre suivant. Ainsi, la sortie de signal lecture du circuit CG₁₁ est reliée à l'entrée de signal d'événement du circuit de gestion CG₁₂ et ainsi de suite jusqu'au circuit CG₁₄, de sorte que ces registres peuvent être lus l'un après l'autre après qu'un signal d'événement ait été émis par un neurone sur l'entrée d'événement de cette mémoire élémentaire.

On reviendra plus loin sur ce processus de lecture successive.

On a représenté encore sur la figure 3 des lignes de mot WL₁₁ à WL₂₄ permettant d'adresser en ligne chaque registre des mémoires élémentaires. Il y a autant de lignes de mot qu'il y a de registres dans la colonne, donc ici quatre fois plus de lignes de mot que de mémoires élémentaires en colonne (donc de neurones en colonne). En utilisant les bus de lignes de bit BL et BLb pour définir les contenus des registres et les lignes de mot pour désigner chaque registre, on peut programmer à volonté tous les registres de la mémoire. Une ligne de mot sert bien entendu à adresser simultanément les registres des différentes colonnes de la mémoire situées sur une même ligne de la mémoire, pour une écriture ou une relecture de ces registres.

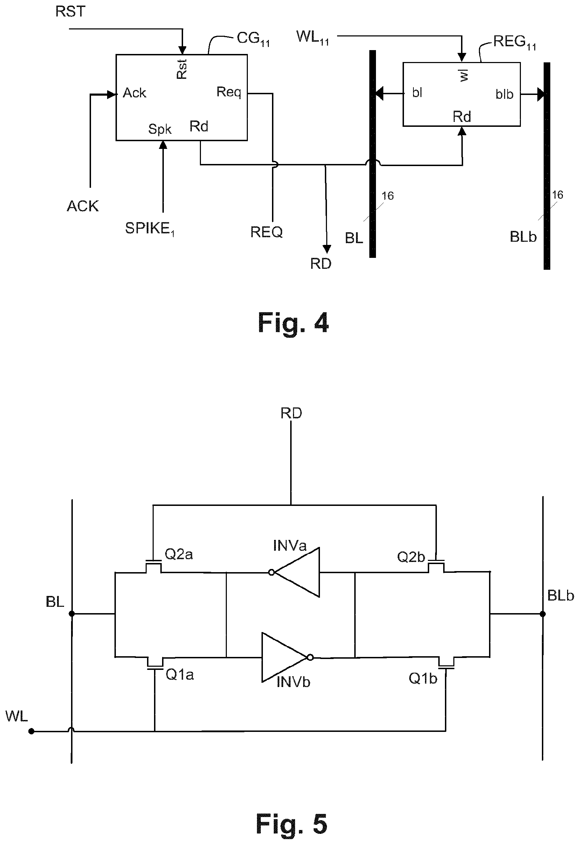

La figure 4 représente l'architecture générale d'un registre de mémoire avec son circuit de gestion respectif, que ce registre soit un premier registre (tel que REG₁₁ ou REG₂₁) de la mémoire élémentaire, ou un autre registre (tel que REG₁₂ REG₁₃, REG₁₄) de cette mémoire. On suppose ici qu'il s'agit du registre REG₁₁ de la figure 3, avec son circuit de gestion CG₁₁.

Le registre de mémoire proprement dit, comprenant par exemple 16 points-mémoire élémentaires, est relié aux lignes de bit qui sont des bus BL et BLb de 16 bits chacun regroupant les lignes de bit élémentaires des 16 points. Il est commandé par la ligne de mot WL₁₁ en phase de programmation ou relecture de la mémoire. Et il possède par ailleurs une entrée d'activation de lecture Rd, cette entrée permettant de lire le contenu du registre lors du fonctionnement du circuit neuromorphique (c'est-à-dire en dehors de la phase de programmation de la mémoire).

Le circuit de gestion CG₁₁ associé au registre REG₁₁ comporte une entrée Spk qui est destinée à recevoir un signal d'événement SPIKE₁ et à mémoriser ce signal ; pour le premier registre de la mémoire élémentaire, cette entrée Spk constitue en même temps l'entrée SPK₁ de la mémoire élémentaire ; pour les autres registres, l'entrée Spk reçoit une sortie d'un circuit de gestion situé en amont. Le circuit CG₁₁ comporte aussi une entrée/sortie Req reliée à la ligne REQ (ligne de requête) et une entrée Ack reliée à la ligne ACK (ligne d'acquittement) ; une deuxième sortie Rd produit le signal de lecture RD destiné au registre associé REG₁₁ pour autoriser la lecture de ce registre.

La sortie Rd du circuit de gestion CG₁₁ est par ailleurs reliée à l'entrée Spk du circuit de gestion du registre situé immédiatement en aval dans l'organisation en colonne des registres. Par conséquent, la production d'un signal RD par le circuit CG₁₁ en réponse au signal d'événement d'un neurone déclenche non seulement la lecture du registre REG₁₁ mais déclenche aussi, sur la sortie Rd, l'équivalent d'un signal d'événement pour l'entrée Spk du circuit de contrôle CG₁₂ du registre situé immédiatement en aval. Et ainsi de suite, chaque circuit de contrôle engendre à la fois sur sa sortie Rd un signal de lecture de son registre associé et un signal d'événement pour le circuit de gestion du registre situé immédiatement en aval, ceci jusqu'au dernier registre de la mémoire élémentaire.

Dans le processus de lecture du contenu des différents registres d'une mémoire élémentaire, à la réception d'un signal d'événement SPIKE₁, le circuit de gestion CG₁₁ exécute les opérations suivantes :
- mémorisation de l'événement représenté par le signal SPIKE₁ ;
- émission d'une requête sur la ligne REQ, si aucune requête n'est actuellement active sur cette ligne, (ou attente si une requête est actuellement active et émission d'une requête lorsque la ligne de requête est libérée) ; la requête peut être constituée par un forçage au niveau logique 0 de la ligne de requête ;
- émission d'un signal sur la sortie Rd à destination du registre associé et du circuit de gestion situé immédiatement en aval ; d'où il résulte la lecture du premier registre et la mémorisation d'un évènement dans le registre suivant ;
- réception d'un signal d'acquittement sur l'entrée Ack et libération de la ligne de requête pour que le circuit de gestion du registre suivant puisse émettre une requête et que ce registre suivant puisse fournir ses données.

La ligne de requête est libérée à la réception par le circuit de gestion d'un signal d'acquittement en provenance de la ligne ACK. Ce signal est produit à l'extérieur de la mémoire par un circuit de contrôle du bus post-synaptique, qui indique qu'il a bien reçu les données extraites de la mémoire.

Enfin, un signal de réinitialisation RST peut être prévu pour forcer, par exemple à chaque mise sous tension, le circuit dans un état inactif connu. Ce signal est appliqué à une entrée Rst du circuit de gestion.

La structure de base de mémorisation d'un bit de donnée dans un registre de la mémoire est celle qui est représentée à la figure 5. C'est un point-mémoire SRAM classique à deux inverseurs tête-bêche INVa, INVb dont les sorties sont reliées à une ligne de bit BL d'un côté, à une ligne de bit complémentaire BLb de l'autre par l'intermédiaire de transistors d'accès Q1a et Q1b commandés par une ligne de mot WL. Mais de plus, les entrées/sorties des inverseurs sont également reliées aux lignes de bit par l'intermédiaire de deux transistors supplémentaires Q2a et Q2b commandés par le signal de lecture RD issu du circuit de gestion du registre.

Cela veut dire qu'on peut écrire dans la mémoire et lire de manière traditionnelle, à travers un décodeur de ligne, par l'intermédiaire de la ligne de mot et des transistors Q1a et Q1b, et qu'on peut en outre lire le contenu de la mémoire par l'intermédiaire du signal RD et des transistors Q2a et Q2b. Le signal RD sera émis soit en réponse à un signal d'événement SPIKE si le point-mémoire fait partie du premier registre REG₁₁ ou REG₂₁ de la mémoire élémentaire, soit en réponse au signal de lecture RD issu du circuit de gestion situé immédiatement en amont si le point-mémoire fait partie d'un registre en aval du premier registre.

On verra plus loin qu'on peut se contenter de deux transistors et non quatre avec un petit circuit d'aiguillage permettant de diriger vers la grille de ces transistors soit la ligne de mot WL (en phase de programmation de la mémoire) soit un signal RD engendré directement ou indirectement par le signal d'événement (en phase d'utilisation du circuit neuromorphique).

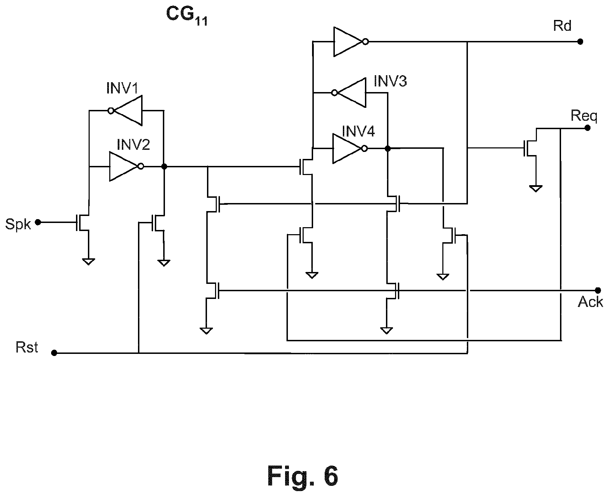

La figure 6 représente à titre d'exemple une réalisation possible du circuit de gestion CG₁₁. Ce circuit réalise électroniquement les fonctions simples indiquées ci-dessus. Il comprend, relié à l'entrée Spk, un groupe de deux inverseurs tête-bêche INV1, INV2 constituant un point-mémoire pour recevoir et mémoriser la réception du signal d'évènement SPIKE₁ ; c'est la sortie de ce point-mémoire qui autorise l'activation de la lecture du registre. L'impulsion SPIKE₁ (ou le signal de lecture RD issu d'un autre circuit de gestion situé en amont et servant de signal d'évènement) peut disparaître dès qu'elle a été mémorisée. A la fin de la lecture, cette mémorisation sera annulée par le signal d'acquittement, mais elle peut aussi être annulée par un signal de réinitialisation globale reçu sur l'entrée Rst du circuit de gestion. Le circuit de gestion comprend aussi un groupe de deux inverseurs tête-bêche INV3, INV4 constituant un deuxième point-mémoire pour recevoir et mémoriser le fait que à la fois une impulsion a été reçue et la ligne de requête est disponible ; la ligne de requête (connectée à l'entrée Req) est ici considérée comme active au niveau logique bas. L'activation du deuxième groupe d'inverseurs tête-bêche force une requête sur la borne Req, requête qui la rend indisponible pour les autres registres de la même colonne. Ce forçage n'a pas lieu si la ligne de requête est déjà active, c'est-à-dire s'il y a déjà une requête en cours pour un autre registre de la même mémoire élémentaire ou une autre mémoire élémentaire associée à un autre neurone.

En même temps que la requête est forcée sur la borne Req, le circuit de gestion envoie sur la sortie Rd le signal de lecture destiné au registre de lecture associé à ce circuit de gestion et destiné par ailleurs au circuit de gestion situé immédiatement en aval.

Puis, lorsque les bits du registre ont été lus, la ligne d'acquittement transmet à l'entrée Ack du circuit de gestion un signal d'acquittement ACK. Ce signal réinitialise les deux points-mémoire du circuit de gestion qui est actuellement activé. La réinitialisation du deuxième point-mémoire désactive la sortie Req et rend disponible la ligne de requête REQ.

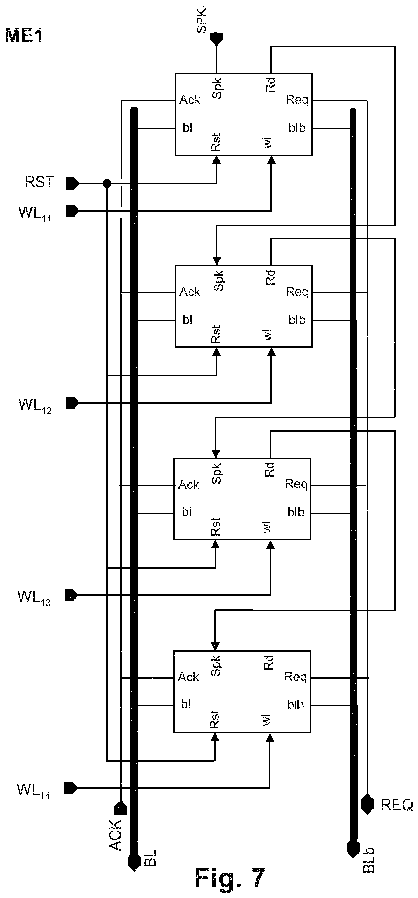

La figure 7 est une autre représentation de l'architecture générale d'une mémoire élémentaire telle que ME₁ ; dans cette figure, on a représenté un seul circuit pour chaque ligne de mot, ce circuit comprenant, à la fois le circuit de gestion et le registre de mémoire. La mémoire élémentaire comporte quatre circuits identiques en colonne, adressés par les lignes de mot WL₁₁ à WL₁₄. Chacun de ces circuits est constitué comme l'ensemble représenté figure 4. Chaque circuit comprend donc une entrée d'événement Spk, une entrée de réinitialisation Rst, une entrée d'adressage en ligne WL, une entrée de signal d'acquittement Ack, une entrée/sortie de requête Req, des sorties de bus bl et blb de seize bits chacune (dans cet exemple), et une sortie de lecture Rd. La sortie de lecture Rd d'un circuit est connectée à l'entrée Spk du circuit situé immédiatement en aval. L'entrée Spk du premier circuit de la chaîne constitue l'entrée d'activation SPK₁ de la mémoire élémentaire et reçoit le signal d'événement SPIKE₁ du neurone associé à cette mémoire élémentaire. La sortie Rd du dernier circuit dans la chaîne n'est pas connectée. On a représenté sur la figure 7 un conducteur de réinitialisation RST permettant de réinitialiser globalement tous les circuits de gestion de la colonne de mémoires élémentaires pour assurer que les circuits soient tous au repos au début du fonctionnement du circuit neuromorphique.

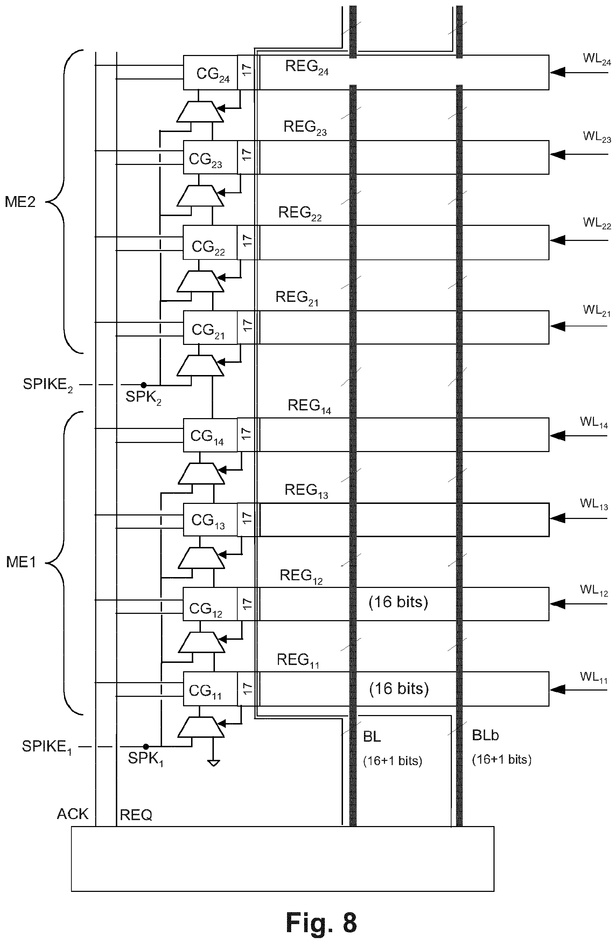

La figure 8 est une variante d'architecture d'une colonne de points mémoires élémentaires associés aux neurones d'une colonne, mais dans laquelle l'association entre un neurone et une mémoire élémentaire est en partie programmable. Cette architecture permet d'associer un nombre variable de registres au neurone. En effet, certains neurones peuvent avoir besoin de déclencher plus de neurones post-synaptiques que d'autres. Par conséquent, alors que les figures précédentes étaient construites sur le principe de quatre registres associés de manière fixe à chaque neurone, la figure 8 est construite sur le principe de l'association d'un nombre variable, programmable, de registres de la colonne à un neurone. Mais bien entendu le nombre total de registres est limité dans une colonne, de sorte que si un neurone utilise plus de registres, d'autres neurones associés à la colonne en utiliseront moins, ou pas du tout.

Pour aboutir à ce résultat, chaque registre post-synaptique comprend non seulement les adresses et poids synaptiques associés à un neurone mais aussi un bit supplémentaire qu'on appellera "bit de configuration" qui détermine si ce registre doit être activé en lecture par un signal d'événement issu directement d'un neurone ou s'il doit au contraire être activé en tant que registre aval par la sortie de lecture d'un registre situé immédiatement en amont.

Par conséquent,
- à la figure 2 c'est toujours le premier registre d'un groupe de quatre registres qui reçoit le véritable signal d'événement SPIKE₁ ou SPIKE₂ issu d'un neurone et ce neurone ne peut être associé qu'à ces quatre registres ; le quatrième registre n'est pas relié au premier registre de la mémoire élémentaire suivante ;
- mais à la figure 8, les quatre registres associés à un neurone peuvent tous recevoir le signal d'évènement SPIKE₁ (ou SPIKE₂) issu du neurone, et chaque registre peut se considérer ou non comme le premier registre selon le bit de configuration qui est programmé dans ce registre ; l'entrée d'activation SPK₁ de la mémoire élémentaire MEM₁ est donc reliée en parallèle aux entrées Spk des circuits de gestion des quatre registres de la mémoire ; on choisit ainsi l'emplacement du premier registre associé au neurone et on peut affecter les registres qui précèdent au neurone précédent ; il est même possible d'affecter à un neurone aval tous les registres associés à un (ou même plusieurs) neurone situé immédiatement en amont dans la même colonne.

Le circuit de gestion comprend donc maintenant un circuit de sélection d'entrée d'évènement (ou multiplexeur), commandé par le bit de configuration programmé dans le registre. On considère ici que ce circuit de sélection fait partie du circuit de gestion du registre, et on voit donc sur la figure 8 que le circuit de gestion comprend maintenant un multiplexeur qui a deux entrées de signal d'évènement, et une sortie qui définit le signal d'évènement effectivement utilisé ; la première entrée de signal d'évènement reçoit le signal SPIKE, par exemple SPIKE₂ pour les circuits CG₂₁ à CG₂₄ et elle est donc directement connectée au neurone associé ; la deuxième reçoit un signal de lecture issu du circuit de gestion situé immédiatement en amont. Le multiplexeur est commandé par le bit de configuration qui est le ici le 17^{ème} bit programmé dans le registre, les 16 premiers bits définissant le véritable contenu de la mémoire élémentaire, c'est-à-dire une adresse et un poids synaptique. On notera que le circuit de gestion du premier registre CG₂₁ du groupe de quatre registres associé au neurone peut lui-même recevoir soit le signal SPIKE₂ issu du neurone, soit un signal de lecture provenant du dernier registre (CG₁₄) d'un groupe de registres situé en amont dans la colonne.

Par conséquent, dans le cas où c'est un registre intermédiaire, par exemple REG₂₃ qui est programmé pour recevoir le signal d'évènement SPIKE₂, les autres registres du groupe sont programmés pour ne pas le recevoir. De plus, les registres REG₂₂ et REG₂₁ situés en amont de REG₂₃ peuvent alors être associés au neurone précédent (donc associés à la mémoire élémentaire ME1) et dans ce cas ils sont programmés pour que leurs circuits de gestion soient mis en cascade avec le signal de lecture issu du dernier registre (REG₁₄) associé à la mémoire située en amont (MEM1). De même, quel que soit le registre programmé pour recevoir le signal SPIKE₂, on peut programmer les registres associés à une mémoire élémentaire située en aval de MEM2 pour que les circuits de gestion de ces registres reçoivent, en cascade, les signaux de lecture issus du dernier registre REG₂₄ de la mémoire élémentaire MEM2.

Par ailleurs, dans ce qui précède, on a considéré que les points-mémoire des registres comportaient deux transistors Q2a et Q2b commandés par un signal de lecture RD pour la lecture en mode réseau neuromorphique en plus des transistors Q1a et Q2a commandés par la ligne de mot WL et qui servent classiquement à l'adressage en ligne du point-mémoire pour la programmation de la mémoire. Cependant, on pourrait aussi prévoir que le point-mémoire comporte seulement deux transistors, par exemple Q2a et Q2b, à la condition que le circuit de gestion comprenne une fonction logique supplémentaire pour aiguiller vers ces transistors soit le signal d'adressage de la ligne de mot WL (pour la programmation de la mémoire) soit, lorsque la ligne de mot n'est pas activée, un signal RD émis par le circuit de gestion du registre situé immédiatement en amont (pour le fonctionnement du circuit neuromorphique).

Un signal de lecture RD est alors établi en pied de colonne et est propagé de circuit de gestion en circuit de gestion lors du fonctionnement du circuit. C'est ce signal RD qui déclenche directement la lecture des points-mémoire du registre lorsque la ligne de mot WL n'est pas activée. Lorsque la ligne de mot est activée, c'est la ligne de mot qui active la lecture ou l'écriture dans les points-mémoire.

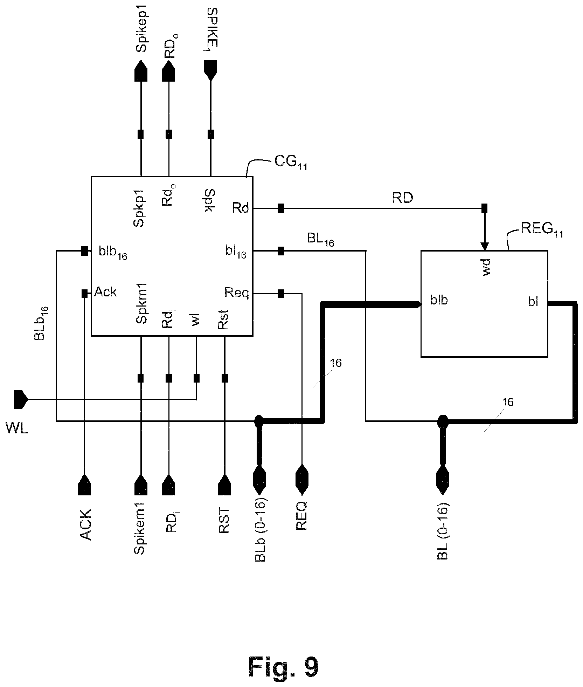

La figure 9 représente l'architecture qui peut en résulter pour un registre, par exemple REG₁₁ et son circuit de gestion associé CG₁₁ (incluant le multiplexeur mentionné précédemment).

Le registre de 17 bits REG₁₁ est visible à droite, le circuit de gestion à gauche. Les 34 sorties du registre vont sur les lignes de bit BL et BLb (17 lignes), parmi lesquels deux sorties BL₁₆ et BLb₁₆ correspondent au 17^{ème} bit programmable servant à commander le circuit de gestion ; ce bit et son complément sont à cet effet appliqués à des entrées bl₁₆ et blb₁₆ du circuit de gestion.

Le registre comprend une entrée d'activation wd qui commande les transistors des points mémoire pour autoriser la lecture ou l'écriture dans le registre. Cette entrée reçoit du circuit de gestion un signal RD qui est déclenché soit (en mode de fonctionnement neuromorphique) par un évènement signalé par un neurone, soit (en mode de programmation de la mémoire) par l'activation de la ligne de mot WLb associé à la ligne à laquelle appartient ce registre.

Le circuit de gestion comprend les mêmes entrées et sorties d'acquittement Ack et de requête Req qu'à la figure 4. Il comprend aussi une entrée Rst de réinitialisation générale. Mais il comprend maintenant non pas une seule entrée Spk de signal d'évènement mais deux entrées Spk et Spkm1, la première étant connectée au neurone associé à la mémoire élémentaire (pour recevoir SPIKE₁) et l'autre étant reliée à une sortie de signal d'évènement du circuit de gestion du registre immédiatement en amont ; ces entrées correspondent aux entrées du multiplexeur mentionné précédemment. Le circuit de gestion comprend aussi une sortie de signal d'évènement (Spkp1) qui est connecté à l'entrée Spkm1 du circuit de gestion aval. Il comprend des entrées bl₁₆ et blb₁₆ destinées à recevoir le 17^{ème} bit BL₁₆ (bit de configuration) et son complément BLb₁₆ servant à déterminer si c'est l'entrée Spk ou l'entrée Spkm1 qui doit être utilisée.

Dans cette configuration où les points-mémoire des registres ne possèdent que les transistors Q2a et Q2b de la figure 5 mais pas les transistors Q1a et Q1b, on prévoit que le circuit de gestion comprend en outre une entrée Rdᵢ pour recevoir un signal de lecture issu d'un circuit de gestion situé immédiatement en amont, une sortie Rdₒ pour fournir un signal de lecture à l'entrée Rdᵢ du circuit de gestion situé en aval, une sortie Rd pour fournir un ordre de lecture à l'entrée wd du registre (c'est-à-dire aux grilles des transistors Q2a, Q2b des points-mémoire du registre). Enfin, le circuit de gestion comprend alors une entrée wl pour recevoir la ligne de mot WL correspondant au registre ; cette entrée détermine quel doit être le signal fourni sur la sortie Rd pour activer le registre : c'est soit un signal ou ordre de lecture déclenché par le signal reçu par l'entrée Rdᵢ (circuit en mode réseau neuromorphique), ceci lorsque WL est inactif (au niveau bas), soit au contraire un ordre d'adressage indépendant des signaux RD lorsque WL est actif (au niveau haut), lorsque le circuit est en mode de programmation de ce registre.

Le circuit fonctionne donc de la manière suivante :
- en mode de programmation du réseau neuromorphique, la ligne de mot WL passe successivement au niveau haut pour adresser chacun des registres à programmer ; elle reste au niveau bas pour les autres ; les entrées Rdᵢ et sorties RDₒ ne sont pas utilisées ; la sortie Rd du circuit de gestion déclenche un ordre d'écriture des 17 points-mémoire du registre adressé ; les lignes de bit apportent l'information à programmer dans ces 17 points-mémoire ;
- en mode de fonctionnement du réseau neuromorphique, la ligne de mot WL est au niveau bas pour tous les registres ; le circuit de gestion reçoit les informations d'évènement en provenance directe du neurone (signal SPIKE₁ sur l'entrée Spk) et les informations d'évènement en provenance du circuit de gestion situé immédiatement en amont (signal Spikem1 sur l'entrée Spkm1) ; c'est le bit de configuration progammé dans le circuit de gestion qui détermine quelle information sera utilisée ; la lecture effective du registre qui a mémorisé une information d'évènement se produit lorsque l'entrée Rdᵢ est activée et bien sûr sous condition que la procédure de requête sur la ligne de requête ait autorisé cette lecture ; l'ordre de lecture est alors émis par la sortie Rd du circuit de gestion vers l'entrée wd du registre. Les données du registre sont appliquées au bus BL, BLb. Le circuit de gestion émet ultérieurement un signal Spikep1 sur la sortie Spkp1 et un signal RD₀ sur la sortie Rdₒ pour déclencher le même processus dans le circuit de gestion situé immédiatement en aval.

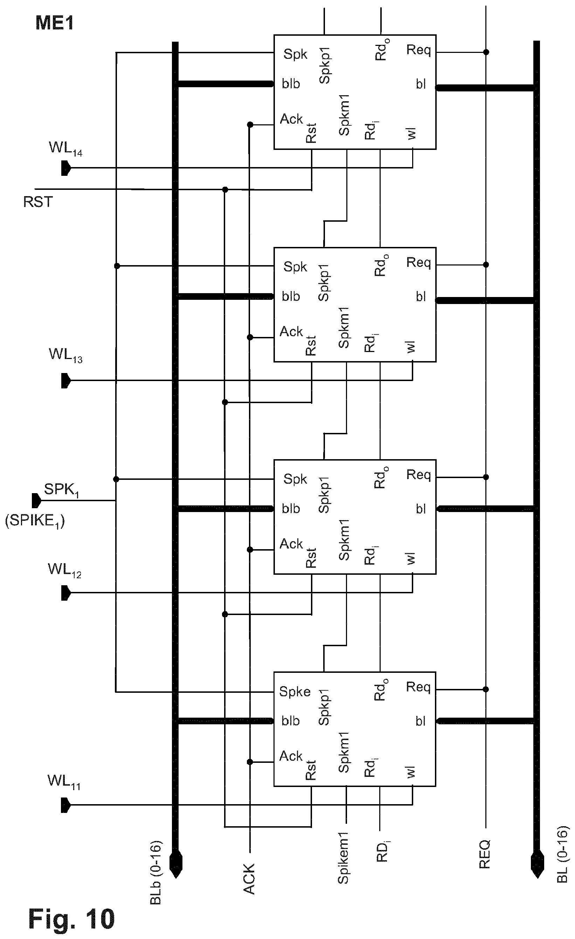

La figure 10 montre la configuration de la mémoire élémentaire ME1 dans une représentation de même type que celle de la figure 7, c'est-à-dire avec un seul bloc affecté à chaque registre et son circuit de gestion associé. On y voit la connexion en cascade des différents blocs d'une même mémoire élémentaire ; la connexion du dernier bloc d'une mémoire élémentaire vers le premier bloc de la mémoire élémentaire suivante est la même que la connexion à l'intérieur d'une mémoire élémentaire.

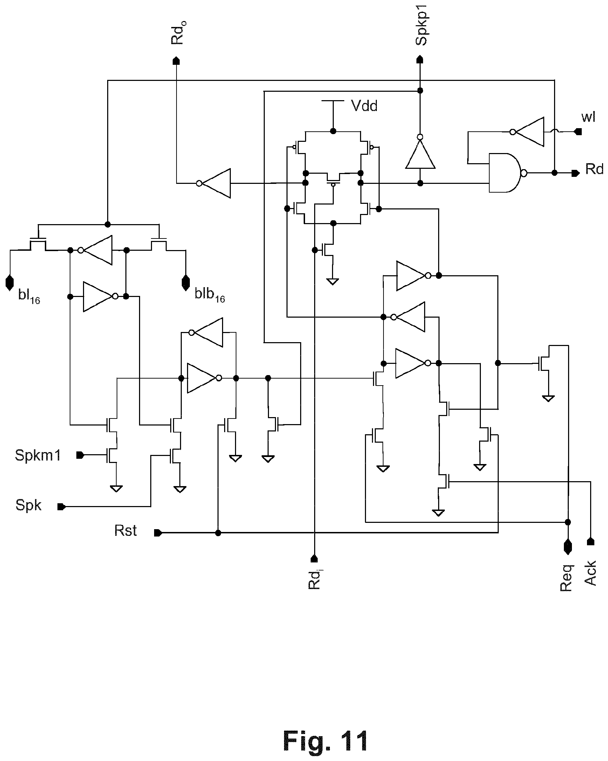

Enfin, la figure 11 montre à titre d'exemple une possibilité de réalisation détaillée du circuit de gestion expliqué en référence à la figure 9.

## Revendications

1. Circuit neuromorphique comprenant
- un réseau (RN) matriciel de neurones à décharge identifiés chacun par une adresse de neurone dans le réseau, chaque neurone pouvant recevoir et traiter au moins un signal d'entrée appliqué à une entrée du neurone puis émettre plus tard sur une sortie du neurone un signal d'évènement représentant un résultat de l'activité du neurone,
- une mémoire matricielle programmable composée de mémoires élémentaires (ME1, ME2) associées chacune à un neurone respectif, la mémoire élémentaire associée à un neurone comportant une donnée, cette donnée comprenant une ou plusieurs adresses d'autres neurones et un poids respectif associé à chaque adresse,
- des conducteurs de colonne reliant, chacun, toutes les mémoires élémentaires d'une même colonne de la mémoire matricielle,
- des moyens pour extraire de chaque mémoire élémentaire la donnée relative à un neurone, après que ce neurone a émis un signal d'évènement représentant un résultat de l'activité du neurone,
- et un circuit de traitement, comprenant un décodeur d'adresse (DEC) apte à sélectionner en ligne et en colonne un neurone déterminé et des moyens (DAC, DEC) pour appliquer un signal d'entrée pondéré à l'entrée d'un neurone identifié par une adresse contenue dans une donnée extraite, le signal d'entrée étant pondéré en fonction du poids associé à cette adresse dans ladite donnée,
- un bus dit bus post-synaptique relié au circuit de traitement pour lui appliquer des données extraites de la mémoire matricielle programmable, chaque association d'une adresse de neurone et de son poids respectif mémorisé pour une donnée étant transmis successivement au circuit de traitement,
- un circuit de gestion de conflits placé entre ledit au moins un conducteur de colonne et le bus post-synaptique,
**caractérisé en ce que** chaque mémoire élémentaire comporte un circuit logique (CG₁₁) pour déclencher l'extraction de la donnée de la mémoire élémentaire après réception du signal d'évènement, une entrée d'activation (SPK₁) de ce circuit logique, reliée directement à la sortie du neurone associé, pour recevoir directement le signal d'évènement émis par ce neurone, et des sorties (bl, blb) reliées au bus post-synaptique pour transmettre la donnée sur ce bus, à destination du circuit de traitement.

2. Circuit neuromorphique selon la revendication 1, **caractérisé en ce que** le circuit logique de chaque mémoire élémentaire comporte un circuit de gestion de conflits pour empêcher l'écriture de données sur le bus pendant qu'une donnée issue d'une autre mémoire élémentaire est en cours d'émission sur le bus.

3. Circuit neuromorphique selon l'une des revendications 1 et 2, **caractérisé en ce que** chaque mémoire élémentaire est située à côté du neurone associé dans le réseau de neurones.

4. Circuit neuromorphique selon l'une des revendications 1 et 2, **caractérisé en ce que** la mémoire est disposée physiquement au-dessus ou au-dessous du réseau de neurones et chaque mémoire élémentaire est située juste au-dessus ou au-dessous du neurone associé auquel elle est reliée.

5. Circuit neuromorphique selon la revendication 4, **caractérisé en ce que** le réseau de neurones est situé sur un premier circuit intégré et la mémoire sur un deuxième circuit intégré placé au-dessus du premier, chaque mémoire élémentaire étant reliée au neurone associé par un contact respectif entre les deux puces.

6. Circuit neuromorphique selon l'une des revendications 1 à 5, **caractérisé en ce que** chaque mémoire élémentaire comporte plusieurs registres de mémoire (REG₁₁ à REG₁₄), chaque registre contenant une adresse et un poids associé, et **en ce qu'**elle comporte des moyens pour appliquer au bus post-synaptique successivement les différentes adresses et poids associés correspondant aux différents registres.

7. Circuit neuromorphique selon la revendication 6, **caractérisé en ce qu'**un premier registre de la mémoire élémentaire reçoit le signal d'évènement (SPIKE₁) issu du neurone associé pour appliquer le contenu du premier registre au bus post-synaptique, et produit un signal de lecture (RD) qui lui-même est appliqué à un deuxième registre, pour appliquer au bus le contenu du deuxième registre, le deuxième registre émettant ensuite un signal de lecture à destination du registre suivant et ainsi de suite jusqu'au dernier registre de la mémoire élémentaire.

8. Circuit neuromorphique selon la revendication 7, **caractérisé en ce que** chaque registre comporte un bit de configuration programmable déterminant si l'extraction du contenu de ce registre doit être activée par un signal d'évènement issu d'un neurone ou par un signal de lecture issu d'un registre situé immédiatement en amont.

9. Circuit neuromorphique selon la revendication 8, **caractérisé en ce que** les registres d'une colonne de mémoires élémentaires correspondant à une colonne de neurones associés sont connectés en cascade de manière qu'un registre quelconque puisse recevoir un signal de lecture d'un registre situé immédiatement en amont même si ce registre situé en amont ne fait pas partie de la même mémoire élémentaire.

10. Circuit neuromorphique selon la revendication 9, **caractérisé en ce que** chaque mémoire élémentaire comprend pour un registre quelconque un circuit de sélection programmable pour recevoir et sélectionner soit un signal d'évènement (SPIKE₁) issu directement d'un neurone associé à la mémoire élémentaire correspondant à ce registre, soit un signal de lecture (Spikem1) issu d'un registre précédent correspondant à la même mémoire élémentaire, soit encore un signal de lecture issu d'un registre précédent correspondant à une autre mémoire élémentaire reliée à un autre neurone.

11. Procédé de fonctionnement d'un circuit selon l'une des revendications 1 à 10, **caractérisé en ce qu'**il comporte les étapes suivantes :
- un neurone émet sur une sortie de neurone un signal d'évènement (SPIKE₁) représentant un résultat de l'activité de ce neurone,
- la mémoire élémentaire associée à ce neurone et reliée directement à ce neurone reçoit ce signal d'évènement et transmet alors sur le bus post-synaptique la donnée qu'elle contient, comprenant au moins une adresse identifiant un autre neurone du réseau et un poids synaptique associé à cette adresse,
- le bus post-synaptique transmet la ou les adresses et le ou les poids synaptiques au circuit de traitement,
- le circuit de traitement applique à une entrée d'un ou plusieurs neurones désignés par la ou les adresses un signal d'entrée respectif affecté du poids synaptique associé à chaque adresse.

## Patentansprüche

1. Neuromorphe Schaltung, die Folgendes umfasst:
- ein Matrixnetzwerk (RN) von Entladungsneuronen, die jeweils durch eine Neuronenadresse in dem Netzwerk identifiziert sind, wobei jedes Neuron mindestens ein an einen Eingang des Neurons angelegtes Eingangssignal empfangen und verarbeiten und dann später an einem Ausgang des Neurons ein Ereignissignal ausgeben kann, das ein Ergebnis der Aktivität des Neurons darstellt,
- einen programmierbaren Matrixspeicher, der aus Elementarspeichern (ME1, ME2) zusammengesetzt ist, die jeweils mit einem jeweiligen Neuron assoziiert sind, wobei der mit einem Neuron assoziierte Elementarspeicher ein Datenelement enthält, wobei dieses Datenelement eine oder mehrere Adressen anderer Neuronen und eine jeweilige, mit jeder Adresse assoziierte Gewichtung enthält,
- Spaltenleiter, die jeweils alle Elementarspeicher einer selben Spalte des Matrixspeichers verbinden,
- Mittel, um aus jedem Elementarspeicher das Datenelement relativ zu einem Neuron zu extrahieren, nachdem dieses Neuron ein Ereignissignal ausgesendet hat, das ein Ergebnis der Aktivität des Neurons darstellt,
- und eine Verarbeitungsschaltung, die einen Adressdecoder (DEC), der in Reihe und Spalte ein bestimmtes Neuron auswählen kann, und Mittel (DAC, DEC) zum Anlegen eines gewichteten Eingangssignals an den Eingang eines Neurons umfasst, das durch eine in einem extrahierten Datenelement enthaltene Adresse identifiziert wird, wobei das Eingangssignal in Abhängigkeit von der mit dieser Adresse in dem Datenelement assoziierten Gewichtung gewichtet wird,
- einen sogenannten postsynaptischen Bus, der mit der Verarbeitungsschaltung verbunden ist, um ihr aus dem programmierbaren Matrixspeicher extrahierte Daten anzulegen, wobei jede Assoziation einer Neuronenadresse und ihrer jeweiligen für ein Datenelement gespeicherten Gewichtung nacheinander zur Verarbeitungsschaltung übertragen wird,
- eine Konfliktmanagementschaltung, die zwischen dem mindestens einen Spaltenleiter und dem postsynaptischen Bus angeordnet ist,
**dadurch gekennzeichnet, dass** jeder Elementarspeicher eine Logikschaltung (CG₁₁) zum Auslösen der Extraktion des Datenelements aus dem Elementarspeicher nach dem Empfang des Ereignissignals, einen Aktivierungseingang (SPK₁) dieser Logikschaltung, der direkt mit dem Ausgang des assoziierten Neurons verbunden ist, um das von diesem Neuron gesendete Ereignissignal direkt zu empfangen, und Ausgänge (bl, blb) umfasst, die mit dem postsynaptischen Bus verbunden sind, um das Datenelement auf diesem Bus zur Verarbeitungsschaltung zu übertragen.

2. Neuromorphe Schaltung nach Anspruch 1, **dadurch gekennzeichnet, dass** die Logikschaltung jedes Elementarspeichers eine Konfliktmanagementschaltung aufweist, um das Schreiben von Daten auf den Bus zu verhindern, während ein Datenelement aus einem anderen Elementarspeicher auf dem Bus gesendet wird.

3. Neuromorphe Schaltung nach einem der Ansprüche 1 und 2, **dadurch gekennzeichnet, dass** sich jeder Elementarspeicher neben dem assoziierten Neuron in dem neuronalen Netzwerk befindet.

4. Neuromorphe Schaltung nach einem der Ansprüche 1 und 2, **dadurch gekennzeichnet, dass** der Speicher physisch über oder unter dem neuronalen Netzwerk angeordnet ist und jeder Elementarspeicher sich direkt über oder unter dem assoziierten Neuron befindet, mit dem er verbunden ist.

5. Neuromorphe Schaltung nach Anspruch 4, **dadurch gekennzeichnet, dass** sich das neuronale Netzwerk auf einer ersten integrierten Schaltung und der Speicher auf einer zweiten integrierten Schaltung befindet, die über der ersten platziert ist, wobei jeder Elementarspeicher mit dem assoziierten Neuron durch einen jeweiligen Kontakt zwischen den beiden Chips verbunden ist.

6. Neuromorphe Schaltung nach einem der Ansprüche 1 bis 5, **dadurch gekennzeichnet, dass** jeder Elementarspeicher mehrere Speicherregister (REG₁₁ bis REG₁₄) umfasst, wobei jedes Register eine Adresse und eine assoziierte Gewichtung beinhaltet, und dadurch, dass sie Mittel umfasst, um an den postsynaptischen Bus nacheinander die verschiedenen Adressen und assoziierten Gewichtungen entsprechend den verschiedenen Registern anzulegen.

7. Neuromorphe Schaltung nach Anspruch 6, **dadurch gekennzeichnet, dass** ein erstes Register des Elementarspeichers das Ereignissignal (SPIKE₁) von dem assoziierten Neuron empfängt, um den Inhalt des ersten Registers an den postsynaptischen Bus anzulegen, und ein Lesesignal (RD) erzeugt, das wiederum an ein zweites Register angelegt wird, um den Inhalt des zweiten Registers an den Bus anzulegen, wobei das zweite Register dann ein Lesesignal zum nächsten Register und so weiter bis zum letzten Register im Elementarspeicher sendet.

8. Neuromorphe Schaltung nach Anspruch 7, **dadurch gekennzeichnet, dass** jedes Register ein programmierbares Konfigurationsbit aufweist, das bestimmt, ob die Extraktion des Inhalts dieses Registers durch ein Ereignissignal von einem Neuron oder durch ein Lesesignal von einem unmittelbar vorgeschalteten Register zu aktivieren ist.

9. Neuromorphe Schaltung nach Anspruch 8, **dadurch gekennzeichnet, dass** die Register einer Spalte von Elementarspeichern entsprechend einer Spalte von assoziierten Neuronen so in Kaskade geschaltet sind, dass jedes Register ein Lesesignal von einem unmittelbar vorgeschalteten Register empfangen kann, selbst wenn dieses vorgeschaltete Register nicht Teil desselben Elementarspeichers ist.

10. Neuromorphe Schaltung nach Anspruch 9, **dadurch gekennzeichnet, dass** jeder Elementarspeicher für jedes Register eine programmierbare Auswahlschaltung zum Empfangen und Auswählen entweder eines Ereignissignals (SPIKE₁) direkt aus einem mit dem Elementarspeicher entsprechend diesem Register assoziierten Neuron oder ein Lesesignal (Spikem1) aus einem vorherigen Register entsprechend demselben Elementarspeicher oder ein Lesesignal aus einem vorherigen Register entsprechend einem anderen, mit einem anderen Neuron verbundenen Elementarspeicher umfasst.

11. Verfahren zum Betreiben einer Schaltung nach einem der Ansprüche 1 bis 10, **dadurch gekennzeichnet, dass** es die folgenden Schritte beinhaltet:
- Senden, durch ein Neuron, an einem Neuronenausgang, eines Ereignissignals (SPIKE₁), das ein Ergebnis der Aktivität dieses Neurons darstellt,
- Empfangen dieses Ereignissignals, durch den mit diesem Neuron assoziierten und direkt mit diesem Neuron verbundenen Elementarspeicher, und Übertragen des darin enthaltenen Datenelements auf dem postsynaptischen Bus, umfassend mindestens eine Adresse, die ein anderes Neuron des Netzwerks identifiziert, und eine mit dieser Adresse assoziierte synaptische Gewichtung,
- Übertragen, durch den postsynaptischen Bus, der Adresse(n) und der synaptische(n) Gewichtung(en) zur Verarbeitungsschaltung,
- Anlegen, durch die Verarbeitungsschaltung, an einen Eingang eines oder mehrerer durch die Adresse(n) designierter Neuronen, eines jeweiligen Eingangssignals, das mit der mit jeder Adresse assoziierten synaptischen Gewichtung multipliziert ist.

## Claims

1. A neuromorphic circuit comprising:
- a matrix network (RN) of discharge neurons, each identified by a neuron address in the network, each neuron being able to receive and process at least one input signal applied to an input of the neuron and then later transmit, on an output of the neuron, an event signal representing a result of the activity of the neuron,
- a programmable matrix memory composed of elementary memories (ME1, ME2), each associated with a respective neuron, the elementary memory associated with a neuron comprising a datum, this datum comprising one or more addresses of other neurons and a respective weight associated with each address,
- column conductors, each linking all elementary memories of a same column of the matrix memory,
- means for extracting, from each elementary memory, the datum relating to a neuron, after this neuron has transmitted an event signal representing a result of the activity of the neuron,
- and a processing circuit, comprising an address decoder (DEC), capable of selecting in row and column a determined neuron, and means (DAC, DEC) for applying a weighted input signal to the input of a neuron identified by an address contained in an extracted datum, the input signal being weighted in function of the weight associated with this address in the said datum,
- a so-called post-synaptic bus linked to the processing circuit for applying to it data extracted from the programmable matrix memory, each association of a neuron address and its respective weight stored for a datum being transmitted successively to the processing circuit,
- a conflicts management circuit disposed between the said at least one column conductor and the post-synaptic bus,
**characterized in that** each elementary memory comprises a logic circuit (CG₁₁) for triggering the extraction of the datum from the elementary memory after reception of the event signal, an activation input (SPK₁) of this logic circuit, linked directly to the output of the associated neuron for directly receiving the event signal transmitted by this neuron, and outputs (bl, blb) linked to the post-synaptic bus for transmitting the datum across this bus to the processing circuit.

2. The neuromorphic circuit according to claim 1, **characterized in that** the logic circuit of each elementary memory has a conflicts management circuit for preventing the writing of data on the bus while a datum arising from another elementary memory is being transmitted on the bus.

3. The neuromorphic circuit according to one of claims 1 and 2, **characterized in that** each elementary memory is juxtaposed with the associated neuron in the neural network.

4. The neuromorphic circuit according to one of claims 1 and 2, **characterized in that** the memory is situated physically above or below the neuron network and each elementary memory is disposed just above or just below the associated neuron to which it is linked.

5. The neuromorphic circuit according to claim 4, **characterized in that** the neural network is situated on a first integrated circuit and the memory on a second integrated circuit placed above the first one, each elementary memory being linked to the associated neuron by a respective contact between the two chips.

6. The neuromorphic circuit according to one of claims 1 to 5, **characterized in that** the elementary memory comprises multiple memory registers (REG₁₁ to REG₁₄), each register containing an address and an associated weight, and **in that** it has means for successively applying the various addresses and associated weights corresponding to the various registers to the post-synaptic bus.

7. The neuromorphic circuit according to claim 6, **characterized in that** a first register of the elementary memory receives the event signal (SPIKE₁) arising from the associated neuron so as to apply the content of the first register to the post-synaptic bus, and produces a read signal (RD) which is itself applied to a second register to apply the content of the second register to the bus, the second register then transmitting a read signal destined for the next register and so on and so forth until the last register of the elementary memory.

8. The neuromorphic circuit according to claim 7, **characterized in that** each register has a programmable configuration bit which determines whether the extraction of the content of this register should be activated by an event signal arising from a neuron or by a read signal arising from a register situated immediately upstream.

9. The neuromorphic circuit according to claim 8, **characterized in that** the registers of a column of elementary memories corresponding to a column of associated neurons are connected in cascade in such a way that any register can receive a read signal from a register situated immediately upstream even if this register situated upstream does not form part of the same elementary memory.

10. The neuromorphic circuit according to claim 9, **characterized in that** each elementary register comprises, for any register, a programmable selection circuit to receive and select either an event signal (SPIKE₁) arising directly from a neuron associated with the elementary memory corresponding to this register, or a read signal (Spikem1) arising from a previous register which corresponds to the same elementary memory, or else a read signal arising from a previous register corresponding to another elementary memory linked to another neuron.

11. Method of operating a circuit according to one of claims 1 to 10, **characterized in that** it has the following steps:
- a neuron transmits to the output of a neuron an event signal (SPIKE₁) representing a result of the activity of this neuron,
- the elementary memory associated to this neuron and directly linked to this neuron receives this event signal and then transmits the datum it contains, comprising at least an address identifying another neuron of the network and a synaptic weight associated to this address, to the post-synaptic bus,
- the post-synaptic bus transmits the one or more addresses and the one or more synaptic weights to the processing circuit,
- the processing circuit applies to an input of one or more neurons designated by the one or more addresses a respective input signal multiplied by the synaptic weight associated to each address.
